# EUROPÄISCHE PATENTSCHRIFT

(11) **EP 1 211 020 B1**
(45) Veröffentlichungstag und Bekanntmachung des Hinweises auf die Patenterteilung: **19.05.2004**
(21) Anmeldenummer: 01128281.1
(22) Anmeldetag: 28.11.2001
(51) Int. Cl.: B23Q 17/22, B23Q 11/06, B23Q 11/14, B23K 10/00, B23K 26/04, B23K 7/10

(54) **Bearbeitungswerkzeugs-Abstands-Messsensor**
Distance sensor for working tool
Capteur de distance pour outil de travail

(30) Priorität: 29.11.2000 DE 10050232
(43) Veröffentlichungstag der Anmeldung: 05.06.2002
(73) Patentinhaber: Schmall, Karl-Heinz, D-76532 Baden-Baden (DE)
(72) Erfinder: Schmall, Karl-Heinz, D-76532 Baden-Baden (DE)
(74) Vertreter: Zipse, Erich, Dipl.-Phys.

(56) Entgegenhaltungen:
- DE-A- 19 725 356

## Beschreibung

In Nachführ-Regelungssystemen von Bearbeitungswerkzeugen, die ohne Berührung mit dem Werkstück arbeiten, werden Abstandssensoren eingesetzt, die das Werkzeug in einem bestimmten, optimalen Abstand zur Werkstückoberfläche konstant halten und die mechanisch mit dem Werkzeug mitgeführt verbunden sind.

Solche Bearbeitungsvorgänge sind z. B. bei Farbspritzvorrichtungen, Schneid- und Schweißanlagen in der Metall- und Kunststoffbearbeitung seit Jahrzehnten Stand der Technik.

Bei den dort eingesetzten automatischen, sensorgeführten Nachregelungs-Systemen werden vielfach kapazitive oder induktive Abstands-Mess-Sensorsysteme eingesetzt, die durch im Sensor erzeugte elektrische oder magnetische Wechselfelder abstandsabhängige Messgrößen, wie Kapazitäts- und/oder Induktivitätsveränderungen und deren Umwandlung in elektrische Regelsignale es ermöglichen, das Werkzeug durch entsprechende, vorwiegend motorische oder hydraulische Antriebe auf konstantem Abstand zur Werkstückoberfläche während des Bearbeitungsvorgangs zu halten.

Die Sensoreinrichtungen müssen dann so beschaffen sein, dass sie möglichst genau die Relativlage des Werkzeugs, beispielsweise einer zylindrischen Spritzdüse, zum Werkstück erfassen können.

Die Werkzeuge, normalerweise zylindrische Körper, sind von unterschiedlichem Durchmesser.

Es ist notwendig, die Sensoren so einzustellen, dass sie symmetrisch/konzentrisch zur Mittelachse des Werkstücks positioniert sind, weil dann optimales Sensorverhalten erreicht wird.

Um diese Forderung mit einheitlichen Sensorabmessungen erreichen zu können, sind verschiedene Einrichtungen entwickelt worden, die eine Sensorzentrierung auch bei unterschiedlichen Werkzeugdurchmessern ermöglichen.

Solche Einrichtungen sind z. B. in den Patentschriften DE 41 32 649 C1 und DE 37 00 643 C2 sowie in der Offenlegungsschrift DE 197 25 356 A1 beschrieben.

Aus der DE 197 25 356 A1 ist eine Haltevorrichtung für Abstandssensoren bekannt, bei der eine den Sensor tragende Klemme mittels einer Dreipunkt-Auflage am Werkzeug positioniert wird. Durch die Geometrie der Dreipunkt-Auflage wird erreicht, dass der Werkzeugdurchmesser um nahezu einen Faktor 2 variiert werden kann, ohne dass sich die Anordnung des Sensors in Bezug auf das Werkzeug ändert.

Die vorliegende Erfindung betrifft eine Vorrichtung zur Montage und Einstellung von Abstands-Mess-Sensoren, die mehrere Anforderungen gleichzeitig erfüllt, welche von den o. g. bekannten Einrichtungen entweder nicht oder nur zum Teil erfüllt werden können.

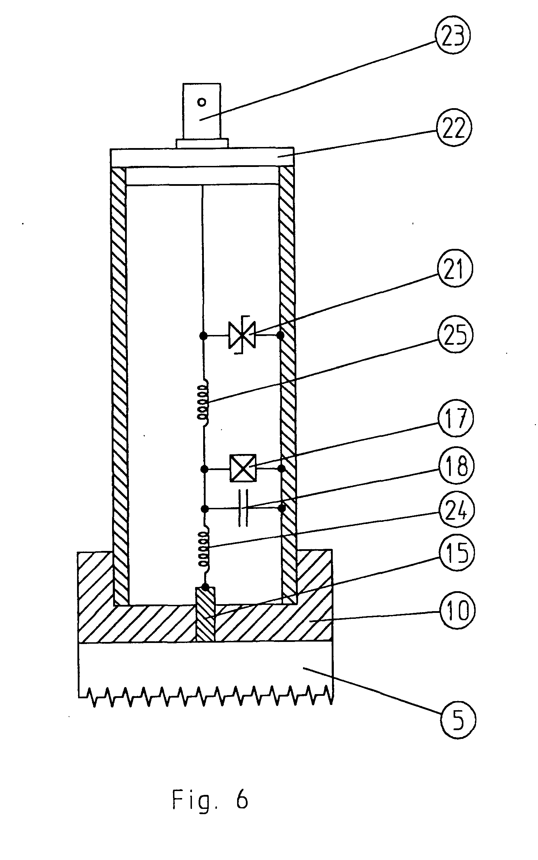

Die besonderen Merkmale der erfindungsgemäßen Einrichtung sind folgende Eigenschaften:
1.)
   Das Sensorelement, entweder ein kapazitiver oder induktiver, vorzugsweise ringförmiger Sensor ist an einer stab- oder rohrförmigen Zuführung befestigt, welche durch eine mäanderförmige Ausbildung im oberen Teil vor der Einspannstelle an der Sensorhalterung sowohl eine höhere Beweglichkeit bei seitlichen Kräften infolge unbeabsichtigten seitlichen Anstoßes des Sensors an einen störenden Körper auf dem Werkstück aufweist als auch eine Verlängerung des wärmeleitenden Weges zwischen Sensor und seiner Einspannstelle bewirkt.
   Im Gegensatz zu der bekannten, z.B. in der Offenlegungsschrift DE 197 25 356 A1 beschriebenen federförmigen Ausbildung der Zuleitung zum Sensor weist die erfindungsgemäße, mäanderförmige Ausbildung der Sensorhalterung eine besonders niedrige elektrische Kapazität gegenüber anderen Teilen der gesamten Haltevorrichtung und damit einen geringeren Einfluss auf die Gesamtkapazität des Sensorsystems auf, was die Genauigkeit des Sensorsystems verbessert.

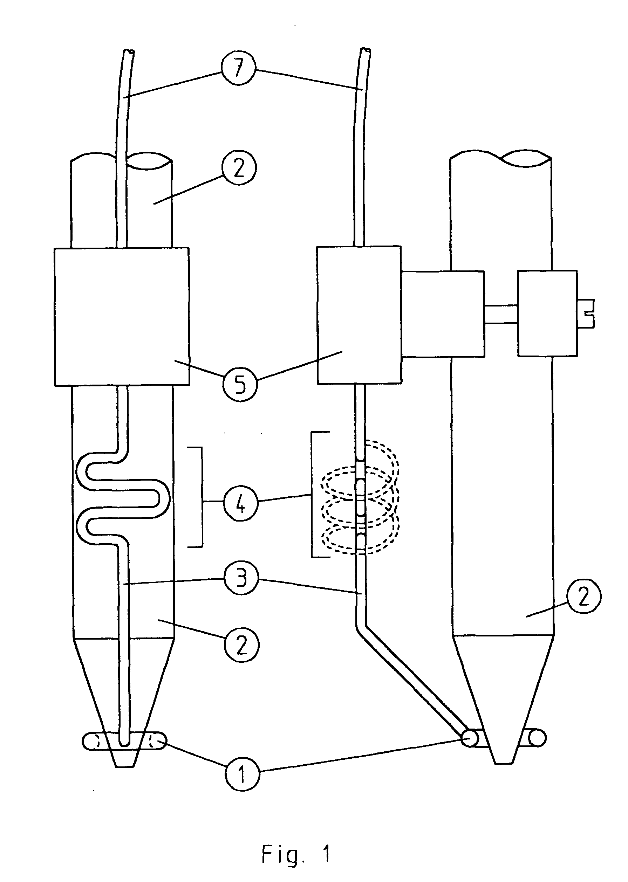

   Fig.1 verdeutlicht dieses Merkmal der erfindungsgemäßen Vorrichtung.
   Die linke Ansicht in Fig1 zeigt als ein Ausführungsbeispiel den Sensorring 1, im Schnitt gezeichnet. Konzentrisch zu diesem befindet sich das Werkzeug 2, als düsenförmiger, runder Körper gezeigt, z.B. eine Farbspritzdüse oder ein Schneidbrenner.
   Mit 3 ist die Sensorzuführung, vorzugsweise ein Metallstab bezeichnet, die mäanderförmig im Bereich 4 ausgebildet ist. In der Sensorhalterung 5 ist die Sensorzuführung 3 mit dem mäanderförmigen Bereich 4 eingespannt.
   Die rechte Ansicht in Fig.1 zeigt das gleiche Beispiel in einer um 90° gedrehten Ansicht. Es ist offensichtlich, dass der Bereich 4 gegenüber dem Werkzeug 2 einen größeren Abstand und damit eine geringere elektrische Kapazität aufweist als bei einer zwischengeschalteten schraubenfeder-förmigen Ausbildung, die in dieser Ansicht gestrichelt dargestellt ist. Mit 6 ist die Klemme bezeichnet, mit der der Sensorhalter am Werkzeug befestigt ist. 7 bezeichnet den Kabelanschluss des Sensors zur Sensorelektronik-Einrichtung. Der mäanderförmige Bereich 4 in Fig 1 kann auch zusätzlich nach außen hin gebogen oder gekrümmt werden, wodurch die schädliche Kapazität zwischen Bereich 4 und dem paralleliegenden Teil des Werkzeuges weiter verringert wird.
2.)
   Erfindungsgemäß ist in einer Ausführungsform die Sensorhalterung so ausgebildet, dass die Einspannquelle der Sensor-Zuführung nicht zentrisch, sondern exzentrisch zur Mittelachse liegt und dass die Sensorschaltung selbst als ein runder Körper ausgebildet ist, der in einer Klemmvorrichtung um vorzugsweise 180° gedreht werden kann. Durch diese Ausbildung wird erfindungsgemäß erreicht, dass - bei gleichbleibenden Abmessungen des Sensors mit seiner Zuführung bei allen in der Praxis vorkommenden verschiedenen Durchmessern von zylindrischen Werkzeugen und bei einheitlicher Klemmvorrichtung der Sensorhalterung am Werkzeug - jeder Sensor, vorzugsweise ein ringförmiger Körper, immer konzentrisch zum Werkstück eingestellt werden kann.

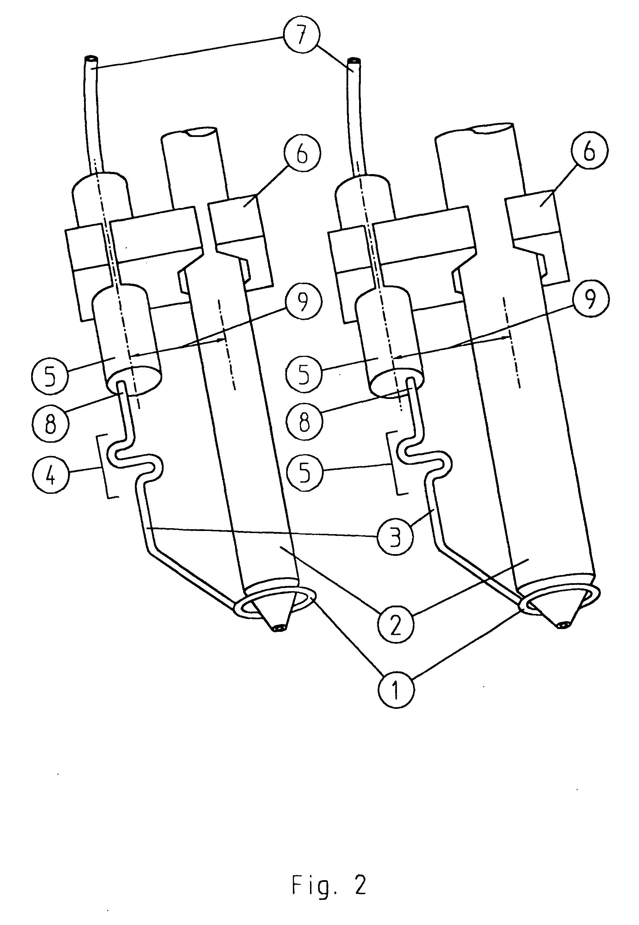

   Fig 2 zeigt als Beispiel eine solche grundsätzliche Ausbildung des Sensorhalters.
   Der Sensorhalter 5 weist an seinem dem Sensor zugekehrten Seite die Aufnahmebohrung 8 auf, welche exzentrisch zur Mittelachse angebracht ist. In dieser Aufnahmebohrung ist die Sensorzuführung eingesteckt und dort mittels nicht dargestellter Schraube geklemmt.
   In der linken Darstellung der Fig 2 ist ein zylindisches Werkzeug geringen Durchmessers gezeigt. Damit der Sensorring 1 konzentrisch zum Werkzeug positioniert werden kann, ist die Sensorhalterung so in der Klemme 6 gedreht, dass die exzentrische Bohrung links von seiner Mittelachse liegt.
   In der rechten Darstellung der Fig.2 ist ein zylindisches Werkzeug wesentlich größeren Durchmessers gezeigt. Die Klemme 6 ist so ausgebildet, dass sie an allen praktisch vorkommenden Werkzeugdurchmesser verwendet werden kann. Der Abstand 9 zwischen den Längsachsen des Werkzeugs 2 und der Sensorhalterung 5 ist entsprechend dem jeweiligen Werkzeugdurchmessern verschieden.
   Durch Drehen der Sensorhalterung 5 im Klemmkörper 6 wird beim Werkzeug größeren Durchmessers die Aufnahmebohrung 8 näher zum Werkzeug hin verlagert, sodass der Sensorring wiederum konzentrisch zur Längsachse des Werkzeugs eingestellt werden kann.

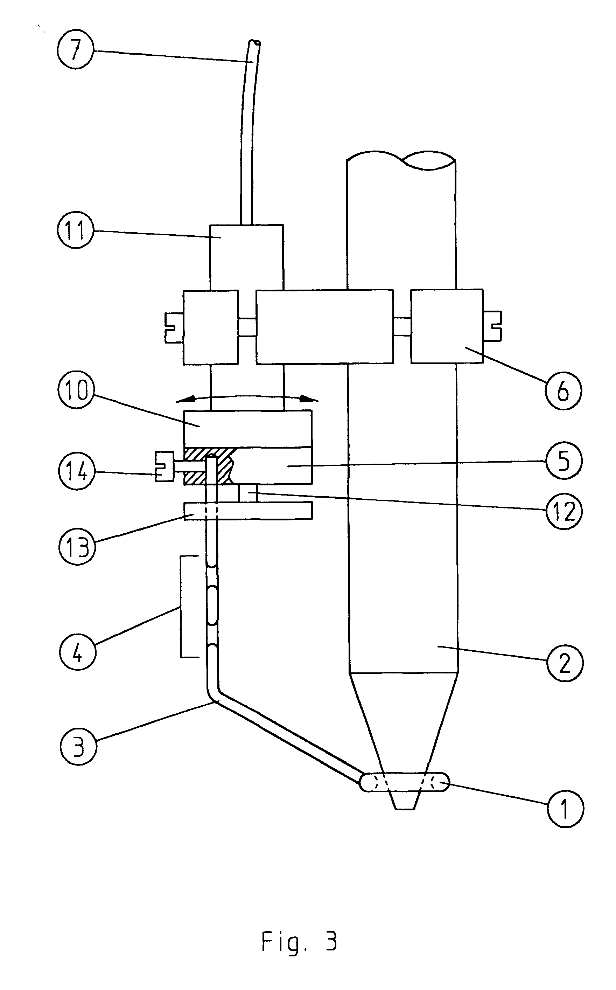

   Fig.3 zeigt als Beispiel für den Einsatz bei Schneidbrennen entsprechend ausgeführte Sensorhalterung.
   Der Körper der Sensorhalterung 5 ist in einem Isolierkörper 10 befestigt, in den auch der Fortsatz 11, vorzugsweise ein Metallrohr, führt. Dieser ist in Klemme 6 um seine Längsachse drehbar und in der gewählten Position geklemmt. Die Klemme 6 ist ihrerseits an das Werkzeug 2 angeklemmt.
   Der Sensorhalter 5 besitzt erfindungsgemäß einen Steg 12 und eine Schutzplatte 13. Die Schutzplatte 13 bildet einen Spritzer- und auch einen Hitzeschutz gegen die Wärmestrahlung des Bearbeitungsprozesses, wobei der Steg 12 einen hohen Wärmeübergangs-Widerstand darstellt, sodass sich die nicht vermeidbare Erwärmung der Schutzplatte 13 nur in geringen Umfang auf den Sensorhalter 5 übertragen kann. Die Sensor-Zuführung 3 / 4 wird im Sensorhalter 5 durch die Schraube 14 geklemmt.
   In einer anderen erfindungsgemäßen Ausführungsform des Sensorhalters wird die Sensorzuführung nicht von unten her in eine exzentrisch angeordnete Bohrung eingesteckt, sondern seitlich in eine radiale Bohrung, in der der abgewinkelte Teil der Sensorzuführung in Richtung oder in Gegenrichtung zum Werkzeug zur Zentrierung des Sensorringes verschoben werden kann.

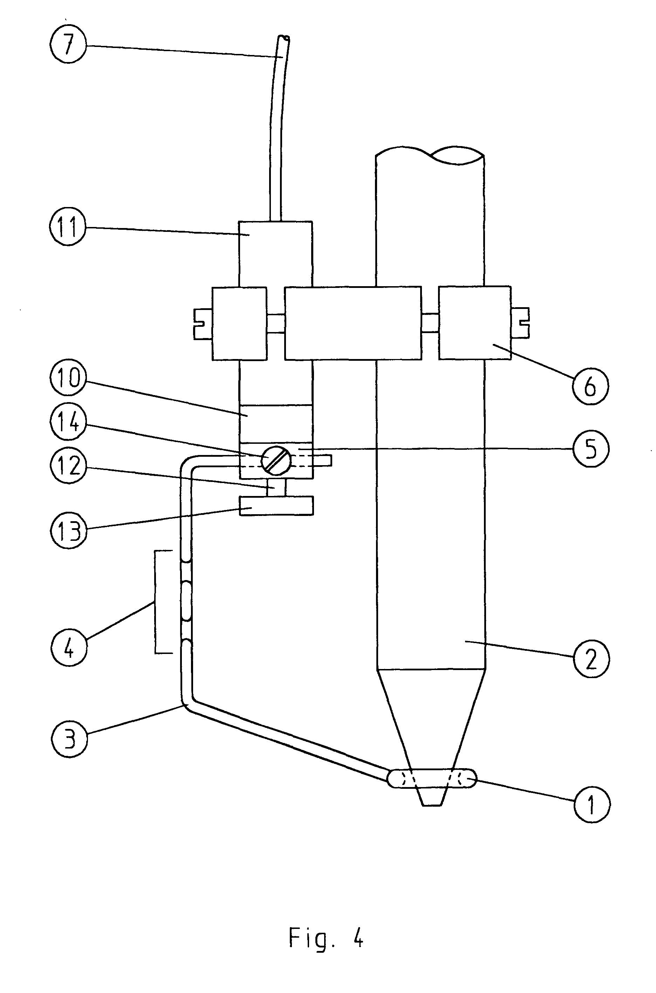

   Fig.4 zeigt eine solche Ausführungsform.
   Der Sensorhalter 5 ist mit einer radial durch seine Mittelachse verlaufenden Bohrung zur Aufnahme der Sensorzuführung ausgestattet.
   Die Sensorzuführung 3 / 4 ist am oberen Teil abgewinkelt und in dieser Bohrung verschiebbar geführt. Sie wird mittels seitlich angeordneter Klemmschraube 14 in der für die Zentrierung des Sensorring 1 zum Werkzeug 2 erforderlichen Lage fixiert.
3.)
   Erfindungsgemäß ist der Fortsatz 11 der in Fig 3 und Fig 4 gezeigten Sensorschaltung zugleich als Aufnahmerohr für die Sensor-Transformationsglieder und für die Hochspannungs-Schutzeinrichtung ausgebildet.
   In der Offenlegungsschrift DE 197 25 356 A2 ist eine Hochspannungs-Schutzeinrichtung gezeigt, die aus einem Schutzkondensator und einem Überspannungsableiter besteht, die in der Klemme beim Werkzeug befestigten Klemme fest eingebaut sind. Auf dieser Klemme befindet sich, ebenfalls fest eingebaut, eine Anschluss-Steckverbindung für die Sensor-Kabelzuführung. Auf der Unterseite der Klemme ist die Einspannquelle für die Sensor-Zuführung angeordnet. In dieser Anordnung sind somit unmittelbar in die Klemmvorrichtung am Werkzeug elektronische Bauteile fest integriert. Bei ihrem Ausfall durch thermische oder elektrische Überlastung (extreme Überspannung beim Plasma-Schneidverfahren) muss dann die gesamte Klemmvorrichtung ausgetauscht werden. Ihre Instandsetzung, soweit möglich, ist kostenträchtig.
   In der erfindungsgemäßen Vorrichtung werden demgegenüber alle einer übermäßigen Beanspruchung ausgesetzten Teile der Sensoreinrichtung in einer leicht austauschbaren kostengünstigen Sensorhalterung untergebracht. Durch verschiedene Ausgestaltung dieser Sensorhalterung lassen sich auch Sonderausführungen von Sensoren einfach und kostengünstig anpassen.
   Erfindungsgemäß wird dadurch außerdem ermöglicht, Überspannungs-Schutzeinrichtungen in einem Bereich geringeren komplexen Widerstandes der elektrischen Sensorschaltung zu verlagern und dadurch das Verwenden von mehrfachen Überspann-Schutzeinrichfungen zu ermöglichen, die Überspannungen wirksamer begrenzen.
   Erfindungsgemäß wird aus diesem Grund das Transformationsglied der Sensorschaltung unmittelbar in die Sensorhalterung integriert, sodass im Bereich der Sensorhalterung 6 mit seinem Isolierkörper 10 und dem Fortsatz 11 sowohl der hochohmige Schaltungsteil als auch der nach der Transformation entstehende niederohmige Teil untergebracht sind.
   Dadurch lassen sich je nach Erfordernis Überspannungs-Schutzmassnahmen sowohl im hochohmigen Bereich, also unmittelbar am Eingang vom Sensor, als auch im Bereich geringen komplexen Widerstandes, also zum Anschlusskabel hin, anordnen. Der Bereich geringen komplexen Widerstandes ermöglicht z.B. den Einsatz sehr schneller Überspannungs-Schutzdioden, welche eine relativ hohe Eigenkapazität besitzen. Sie können bei hochohmigen komplexen Widerständen, unmittelbar hinter dem Sensor mit seiner Zuführung, deshalb nicht eingesetzt werden, weil ihre hohe Eigenkapazität und deren Temperaturabhängigkeit das Sensor-Nutzsignal unzulässig verfälschen würden.
   Deshalb müssen unmittelbar hinter dem Sensor kapazitätsarme und temperaturstabile Überspannungs-Ableiter verwendet werden, die jedoch eine relativ hohe Ansprechsspannung von min. 90V besitzen und deren Ansprechszeit in der Größe von einigen Millisekunden liegt ein Wert, der bei schnellen Überspannungsänderungen zu lang ist, um wirksame Begrenzung zu sichern.
   Die erfindungsgemäße Einrichtung gestattet es nun, die Überspannungs-Schutzmaßnahmen unmittelbar in Sensornähe, aber in der austauschbaren Sensorhalterung, bestehend aus den Teilen 15, 10 und 11 in Fig. 3, zusammen mit dem Transformationsglied, unterzubringen und dadurch zu optimieren, dass sowohl kapazitätsarme, relativ langsam ansprechende Überspannungs-Ableiter vor dem Transformationsglied, als auch sehr schnell reagierende Spannungsbegrenzer-Schutzdioden hinter dem Transformationsglied angeordnet werden können.
   In den Klemmvorrichtungen noch dem Stand der Technik für das Anbringen der Sensoranordnung am Werkzeug, wie z.B. in den oben genannten Patent- bzw. Offenlegungsschriften beschrieben, sind derartige erfindungsgemäße Kombinationen nicht bekannt.

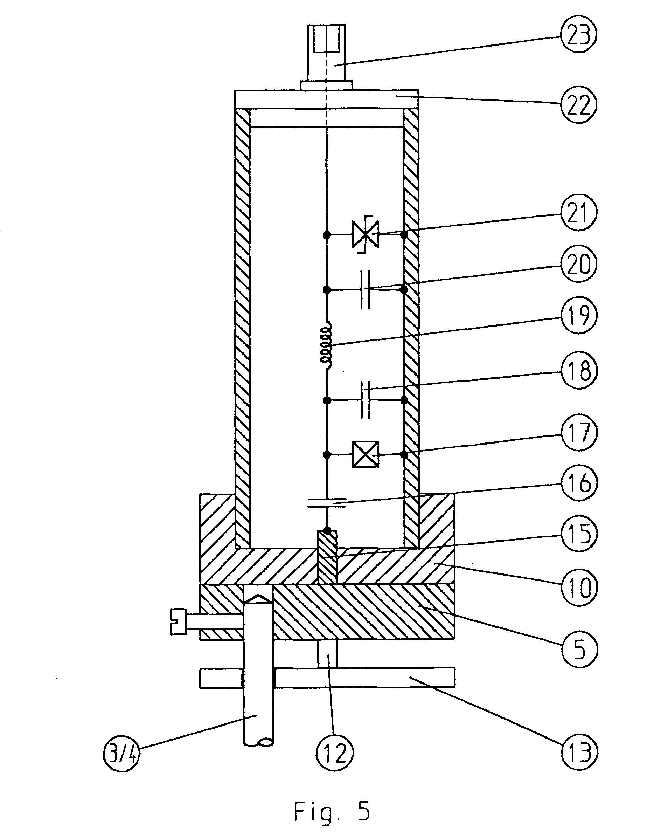

   Fig.5 zeigt eine mögliche Anordnung der erfindungsgemäßen Kombination als ein Anwendungsbeispiel. Darin ist mit 5 wieder die Sensorhalterung 11 mit den Teilen 12 und 13 gezeigt. Die nicht vollständig gezeigte Sensorzuführung 3 / 4 ist mittels Klemmschraube 14 in der exzentrischen Bohrung in 5 befestigt. Oberhalb von 5 ist der Isolierkörper 10, vorzugsweise ein keramischer Körper angeordnet. Ein darin eingeklebter Zapfen 15 verbindet die Sensorhalterung 5 elektrisch mit dem im rohrförmigen Fortsatz 11 untergebrachten Teilen der anschließenden Schaltung für Transformation und Überspannungsschutz.
   Sie besteht aus der Reihenkapazität 16, dem dahinterliegendem Überspannungsschutz niedriger Kapazität, jedoch hoher Ansprechspannung und relativ hoher Ansprechszeit 17, dem Transformationsglied 18, 19, 20, im Beispiel als π-Tiefpass-Transformationsglied ausgeführt und den schnellen Überspannungs-Schutzdiodenkombination 21.
   Am oberen Ende des Fortsatzes 11 befindet sich ein Abschlussdeckel 22 mit der Steckverbindung 23, an die das zu Sensor-Auswerte-Schaltung führende Kabel angeschlossen wird.
   Die elektrischen Komponenten der Sensorschaltung sind mit den üblichen Schaltbild-Symbolen und nicht als bauliche Größen gezeigt, weil bei dieser Darstellung ihre Funktionen klar ersichtlich sind.
   Selbstverständlich kann die erfindungsgemäße Anordnung auch in anderer Reihenfolge oder mit einem anderen geeigneten Transformationsglied, etwa einem T-Glied, ausgestattet werden.
   Ein solches Anwendungsbeispiel zeigt Fig.6. Der Einfachheit halber wird hier nur der rohrförmige Fortsatz mit den innenliegenden Komponenten dargestellt.
   Bei diesem Ausführungsbeispiel ist eine Induktivität 24 unmittelbar in Reihe zum Sensor am Zapfen 15 angeschlossen. Sehr schnelle Störspannungsspitzen hoher Frequenz an relativ niederohmiger Quelle, wie sie beim Zünden von Lichtbogen entstehen, finden in 24 einen relativ hohen komplexen Widerstand vor, sodass sie sich nur teilweise an der Überspannungsableiter / Kapazität-Parallelschaltung 17/18 auswirken können. Die zweite Induktivität 25 setzt den Rest weiter herab. Schutzdioden 21 schließlich kappen die noch dort ankommende Störspannung auf einen niedrigen, unschädlichen Wert. Die Transformationsfunktion des T-Glieds entspricht denen der Schaltung in Fig.5.
   Selbstverständlich sind auch noch weitere Schaltungsmöglichkeiten realisierbar, beispielsweise Hochpass-Transformationsglieder.
   Das in Fig.6 gezeigte Anwendungsbeispiel ermöglicht außerdem eine galvanische Verbindung zwischen der an der Steckverbindung 23 liegenden elektronischen Sensorschaltung, welche die kapazitive bzw. induktive werkstücks-abstandsabhängige Veränderung des Sensorkreises weiterverarbeitet und dem Sensor selbst. Damit ist es möglich, Berührungen zwischen Sensor und Werkstück als Kollisionssignal durch ein dem Sensorsignal überlagertes Gleichstromsignal zur externen Sensor-Auswertschaltung zu signalisieren.

## Patentansprüche

1. Bearbeitungswerkzeug-Abstands-Mess-Sensor mit einem Sensorkörper (1), einer Zuführung (3, 4) zum Sensorkörper (1) und einer Sensorhalterung (5), wobei die Zuführung (3, 4) zum Sensorkörper (1) in der Sensorhalterung (5) eingespannt ist, wobei die Sensorhalterung (5) in einer Werkzeug-Klemmvorrichtung (6) befestigt ist, wobei der Sensorkörper über eine motorisch oder hydraulisch angetriebene Nachführeinrichtung, angesteuert durch eine Regeleinrichtung, positioniert wird, mit Mitteln zum Schutz von mit dem Sensorkörper verbundenen elektrischen Schaltungsteilen gegenüber Überspannungen und thermischen Belastungen, wobei unmittelbar hinter dem Sensorkörper (1) und seiner Zuführung (3, 4) in der Sensorhalterung (5) die elektrischen Schutzmaßnahmen gegen elektrische Überspannungen vorgesehen sind, **dadurch gekennzeichnet, dass** die Sensorhalterung (5) als in die Werkzeug-Klemmvorrichtung (6) nicht fest integriertes, austauschbares Bauteil ausgebildet ist und um ihre eigene Längsachse gedreht werden kann, dass auf der dem Sensorkörper (1) und seiner Zuführung (3, 4) zugewandten Seite der Sensorhalterung (5) eine oder mehrere exzentrisch zur Mittelachse angebrachte Bohrungen (8) vorgesehen sind, wobei in einer die Sensorzuführung eingesteckt ist und dort fixiert ist, oder dass die Sensorhalterung (5) mit einer radial durch ihre Mittelachse verlaufenden Bohrung zur Aufnahme der Sensorzuführung (3, 4) ausgestattet ist, wobei durch Drehen der Sensorhalterung (5) um ihre Mittelachse der Sensorkörper (1) in seiner Lage verändert werden kann, wobei die Zuführung zum Sensorkörper (1) mit einem mäanderförmig ausgebildeten Teil (4) zwischen Sensorkörper (1) und seiner Einspannstelle in der Sensorhalterung (5) ausgestattet ist, wobei in der Sensorhalterung (5) sowohl die Überspannungs-Schutzeinrichtungen als auch elektrische Transformationsglieder zur Anpassung des komplexen hochohmigen Teils der Sensoreinrichtung an ihren komplexen niederohmigen Teil mit dem Zuführungskabel zur Sensorsignal-Auswerteschaltung untergebracht sind.

2. Sensor nach Anspruch 1, **dadurch gekennzeichnet, dass** ein kapazitiver, ringförmiger Sensorkörper (1) mit einem Metallstab oder einem Metallrohr als Zuführung (3) ausgerüstet ist, dass diese Zuführung (3) einen mäanderförmigen Bereich (4) aufweist und im Sensorhalter in einer Bohrung (8) austauschbar festgeklemmt wird.

3. Sensor nach Anspruch 1, **dadurch gekennzeichnet, dass** der Sensorhalter (5) einen vorzugsweise metallischen Aufnahmekörper an seiner dem Sensor (1) zugekehrten Seite aufweist, der eine oder mehrere parallel zu seiner Längsachse exzentrisch angeordnete Bohrungen enthält, in die die Sensor-Zuführung (3, 4) eingesteckt und durch eine Klemmvorrichtung, vorzugsweise eine Klemmschraube (14), fixiert wird.

4. Sensor nach den Ansprüchen 1 und 2, **dadurch gekennzeichnet, dass** der Aufnahmekörper des Sensorhalters (5) eine oder mehrere radiale Bohrungen aufweist und dass die Sensorzuführung (3, 4) an ihrem oberen Ende so abgewinkelt ist, dass sie in eine Bohrung eingesteckt und in ihr radial verschiebbar wird und dass sie in der gewählten Verschiebestellung durch eine Klemmvorrichtung, vorzugsweise eine Klemmschraube (14), arretiert werden kann.

5. Sensor nach den Ansprüchen 1, 2, 3 und 4, **dadurch gekennzeichnet, dass** in der Sensorhalterung (5) eine oder mehrere Überspannungs-Schutzkomponenten, vorzugsweise Überspannungsableiter (17) und/oder Spannungsbegrenzer-Schutzdioden (21), eingebaut sind und dass sie zusammen mit den elektrischen Transformationsgliedern (18, 19, 20), vorzugsweise Induktivitäten und Kapazitäten, so in die Sensorschaltung integriert sind, dass Überspannungsableiter (17) im hochohmigen komplexen Widerstandsbereich und Spannungsbegrenzer-Schutzdioden (21) im niederohmigen komplexen Widerstandsbereich der Transformationsschaltung eingeschaltet sind.

6. Sensor nach Anspruch 1, **dadurch gekennzeichnet, dass** die Sensorhalterung (5) an ihrer dem Sensor (1) zugekehrten Seite eine Wärme- und Spritzschutzplatte (13) trägt, welche durch einen oder mehrere dünne Stege (12) geringer Leitfähigkeit mit dem Sensorhalter (5) verbunden ist.

7. Sensor nach Anspruch 5, **dadurch gekennzeichnet, dass** als Transformationsglied (18, 19, 20) zwischen dem hochohmigen komplexen Widerstand des Sensors (1) und dem niederohmigen komplexen Widerstand der angeschlossenen externen Sensorsignal-Auswerteschaltung ein π-Glied als Tiefpass, bestehend aus einer oder mehreren Induktivitäten(19) im Längspfad und einer oder mehrere Kapazitäten (18, 20) im Querpfad, eingebaut ist.

8. Sensor nach Anspruch 2, **dadurch gekennzeichnet, dass** die mäanderförmigen Windungen (4) der Sensorzuführung in einer Biegeebene liegen.

9. Sensor nach Anspruch 2, **dadurch gekennzeichnet, dass** die mäanderförmige Ausbildung (4) der Sensorzuführung (3, 4) zusätzlich in einer anderen Ebene so abgewinkelt oder gekrümmt ist, dass die schädliche Kapazität der Sensorzuführung (3, 4) gegen das parallel laufende Werkzeug (2) auf einen kleinstmöglichen Wert herabgesetzt wird.

## Claims

1. Machine tool distance measurement sensor with a sensor body (1 ), a feed (3, 4) to the sensor body (1) and a sensor holder (5), where the feed (3, 4) to the sensor body (1) is clamped in the sensor holder (5), the sensor holder (5) being attached in a tool clamp device (6), the sensor body being positioned via a motorised or hydraulically driven tracking device controlled by a control device, with means to protect electrical circuit parts connected with the sensor body against surge voltages and thermal overloads, where directly behind the sensor body (1) and its feed (3, 4) in the sensor holder (5) are provided the electrical protection measures against electrical surge voltages, **characterised in that** the sensor holder (5) is formed as a replaceable component not firmly integrated in the tool clamping device (6) and can be rotated about its own longitudinal axis, that on the side of the sensor holder (5) facing the sensor body (1) and its feed (3, 4) are provided one or more bores (8) arranged eccentric to the central axis, where the sensor feed can be inserted in one of said bores and fixed there, or that the sensor holder (5) is equipped with a bore running radially through its central axis to receive the sensor feed (3, 4), where the position of the sensor body (1) can be changed by rotation of the sensor holder (5) about its central axis, the feed to the sensor body (1) being equipped with a meander-like part (4) between the sensor body (1) and its clamping point in the sensor holder (5), where in the sensor holder (5) are accommodated both the surge voltage protection devices and the electrical transformer elements to adapt the complex high resistance part of the sensor device to its complex low resistance part with the feed cable to the sensor signal analysis circuit.

2. Sensor according to claim 1, **characterised in that** a capacitative, annular sensor body (1) is fitted with a metal rod or metal tube as a feed (3), that this feed (3) has a meander-like area (4) and is clamped exchangeably in the sensor holder in a bore (8).

3. Sensor according to claim 1, **characterised in that** the sensor holder (5) has a preferably metallic receiving body on its side facing the sensor (1), which body contains one or more bores arranged eccentric and parallel to its longitudinal axis, into which bores the sensor feed (3, 4) can be inserted and fixed by a clamping device, preferably a clamping screw (14).

4. Sensor according to claims 1 and 2, **characterised in that** the receiving body of the sensor holder (5) has one or more radial bores and that the sensor feed (3, 4) is bent at its upper end so that it is inserted in a bore and can be moved radially in this and that it can be locked in the selected displacement position by a clamping device, preferably a clamping screw (14).

5. Sensor according to claims 1, 2, 3 and 4, **characterised in that** in the sensor holder (5) are integrated one or more surge voltage protection components, preferably surge diverters (17) and/or voltage-limiting protective diodes (21), and that together with the electrical transformer elements (18, 19, 20), preferably inductances and capacitances, they are integrated in the sensor circuit such that surge diverters (17) are connected in the high impedance complex resistance area and the voltage-limiting protective diodes (21) are connected in the low impedance complex resistance area of the transformation circuit.

6. Sensor according to claim 1, **characterised in that** the sensor holder (5) on its side facing the sensor (1) carries a heat- and splash-protection plate (13) which is connected with the sensor holder (5) by one or more thin webs (12) of low conductance.

7. Sensor according to claim 5, **characterised in that** as a transformer element (18, 19, 20) between the high impedance complex resistance of the sensor (1) and the low impedance complex resistance of the connected external sensor signal analysis circuit is integrated a Π element as a low pass comprising one or more inductances (19) in the longitudinal path and one or more capacitances (18, 20) in the transverse path.

8. Sensor according to claim 2, **characterised in that** the meander-like windings (4) of the sensor feed lie in a bending plane.

9. Sensor according to claim 2, **characterised in that** the meander-like design (4) of the sensor feed (3, 4) is also bent or curved in another plane so that the harmful capacitance of the sensor feed (3, 4) against the parallel running tool (2) is reduced to a lowest possible value.

## Revendications

1. Capteur de distance pour outil ou outil de travail avec un corps de capteur (1), une conduite (3, 4) allant vers le corps du capteur (1) et un support de capteur (5), sachant que la conduite (3, 4) allant vers le corps du capteur (1) est encastrée dans le support du capteur (5), sachant que le support du capteur (5) est fixé dans un dispositif de serrage pour outil (6), sachant que le corps du capteur est positionné par l'intermédiaire d'un suiveur actionné par moteur ou de manière hydraulique, commandé par l'intermédiaire d'un dispositif de réglage, avec des moyens de protection des pièces de circuit électriques reliées au corps du capteur contre les surtensions et charges thermiques, sachant que les mesures de protection électriques contre les surtensions électriques sont prévues immédiatement derrière le corps du capteur (1) et sa conduite (3, 4) dans le support du capteur (5), **caractérisé en ce que** le support du capteur (5) est conçu comme pièce remplaçable n'étant pas intégrée de façon fixe dans le dispositif de serrage pour outil (6) et peut être pivoté autour de son propre axe longitudinal, qu'un ou plusieurs alésages (8) placés de manière excentrée par rapport à l'axe central sont prévus sur la partie dirigée vers le corps du capteur (1) et sa conduite (3, 4), la conduite du capteur étant introduite et fixée dans un de ces alésages, ou que le support du capteur (5) est pourvu d'un alésage traversant radialement son axe central, pour recevoir la conduite du capteur (3, 4), moyennant quoi le corps du capteur (1) peut être changé de position via la rotation du support du capteur (5) autour de son axe central, moyennant quoi la conduite allant vers le corps du capteur (1) est équipée d'une pièce (4) conçue en forme de méandre entre le corps du capteur (1) et son point d'encastrement dans le support du capteur (5), moyennant quoi dans le support du capteur (5), non seulement les dispositifs de protection contre les surtensions, mais aussi les éléments de transformation électriques pour l'adaptation de la pièce complexe à haute impédance du dispositif de captage sont installés contre leur pièce complexe à faible impédance avec le câble d'alimentation allant vers le circuit d'exploitation de signal de capteur.

2. Capteur selon la revendication 1, **caractérisé en ce qu'**un corps de capteur (1) capacitif, en forme de bague est muni d'une barre métallique ou d'un tuyau métallique comme conduite (3), que cette conduite (3) comprend une zone (4) en forme de méandre et est bloquée de manière échangeable dans le support du capteur dans un alésage (8).

3. Capteur selon la revendication 1, **caractérisé en ce que** le support du capteur (5) comprend un corps récepteur, de préférence métallique, sur sa partie dirigée vers le capteur (1), qui contient un ou plusieurs alésages disposés de manière excentrée et parallèle par rapport à son axe longitudinal, dans lesquels la conduite du capteur (3, 4) est encastrée et fixée par l'intermédiaire d'un dispositif de serrage, de préférence une vis de serrage (14).

4. Capteur selon les revendications 1 et 2, **caractérisé en ce que** le corps récepteur du support du capteur (5) comprend un ou plusieurs alésages radiaux et que la conduite du capteur (3, 4) est pliée à son extrémité supérieure, de telle sorte qu'elle soit encastrée dans un alésage et puisse y être déplacée radialement et qu'elle puisse être arrêtée dans la position de déplacement choisie grâce à un dispositif de serrage, de préférence une vis de serrage (14).

5. Capteur selon les revendications 1, 2, 3 et 4, **caractérisé en ce qu'**un ou plusieurs composants de protection contre les surtensions, de préférence des coupe-circuits de surtension (17) et/ou diodes de protection limitant la tension (21), sont montés dans le support du capteur (5) et qu'ils sont intégrés avec les éléments de transformation électriques (18, 19, 20), de préférence inductances et capacités, dans le circuit du capteur, de telle sorte que des coupe-circuits de surtension (17) soient branchés dans la zone de résistance complexe à haute impédance, et des diodes de protection limitant la tension (21), dans la zone de résistance complexe à faible impédance du circuit de transformation.

6. Capteur selon la revendication 1, **caractérisé en ce que** le support du capteur (5) porte sur son côté adjacent au capteur (1) un disque anti-chaleur et de protection contre les projections (13), lequel est relié au support du capteur (5) par l'intermédiaire d'une ou plusieurs fines tiges (12) de faible conductivité.

7. Capteur selon la revendication 5, **caractérisé en ce qu'**est monté, comme élément de transformation (18, 19, 20) entre la résistance complexe à haute impédance du capteur (1) et la résistance complexe à faible impédance du circuit d'exploitation de signal de capteur externe raccordé, une section pi comme passe-bas, constituée d'une ou plusieurs inductances (19) dans un cheminement longitudinal et une ou plusieurs capacités (18, 20) dans un cheminement transversal.

8. Capteur selon la revendication 2, **caractérisé en ce que** les lacets (4) en forme de méandre de la conduite du capteur se trouvent à un niveau de flexion.

9. Capteur selon la revendication 2, **caractérisé en ce que** la conception (4) en forme de méandre de la conduite du capteur (3, 4) est en outre pliée et courbée à un autre niveau, de telle sorte que la capacité néfaste de la conduite du capteur (3, 4) contre l'outil (2) fonctionnant parallèlement soit réduite à la valeur la plus petite possible.
